# EUROPEAN PATENT SPECIFICATION

(11) **EP 0 320 026 B1**
(45) Date of publication and mention of the grant of the patent: **27.10.1993**
(21) Application number: 88201603.3
(22) Date of filing: 18.07.1988
(51) Int. Cl.: A23B 4/06, F25C 5/00, B63B 35/24

(54) **Method and apparatus for cooling fish on board a ship**
Verfahren und Vorrichtung zum Kühlen von Fisch an Bord eines Schiffes
Procédé et dispositif de réfrigération de poissons à bord d'un navire

(30) Priority: 20.07.1987 US 75465; 02.06.1988 US 203533
(43) Date of publication of application: 14.06.1989
(73) Proprietor: Sunwell Engineering Company Limited, Woodbridge Ontario L4L 4X7 (CA)
(72) Inventor: Goldstein, Vladimir L., Toronto Ontario Canada M4P LZ2 (CA); La, David, Downsview Ontario Canada M11 3X8 (CA)
(74) Representative: Marsh, Roy David (GB)

(56) References cited:
- EP-A- 0 107 755
- EP-A- 0 168 537
- DE-C- 668 100
- FR-A- 754 096
- GB-A- 1 033 872
- GB-A- 1 481 537
- US-A- 1 547 258
- US-A- 4 051 690
- US-A- 4 104 889
- US-A- 4 129 015
- US-A- 4 249 388
- US-A- 4 341 085
- US-A- 4 509 344
- US-A- 4 584 843

## Description

### TECHNICAL FIELD

The present invention relates to an apparatus and a method for cooling fish on board a ship.

### BACKGROUND ART

It is desirable in fishing operations on board ships to cool fish soon after they are caught to ensure that they do not spoil. Conventionally, this is done by manually spreading large pieces of ice over the fish on board the ship. The disadvantages of doing this are that the fish are not cooled quickly, because the contact area between the ice and fish is small. Furthermore, the ice tends to freeze the fish because of the large amount of salt that is generally trapped in large pieces of ice. This freezing of the fish may result in spoilage of the fish due to later thawing and refreezing of the fish.

EP-A-0 168 537 discloses an ice-making machine for processing ice particles in brine, with transport means connected to an outlet of the machine.

According to a first aspect of the present invention there is provided apparatus, as claimed below, for cooling fish on board a ship.

According to a second aspect of the present invention, there is provided a method, as claimed below, of cooling fish on board a ship.

The invention allows fish to be cooled in situ on board a ship, either by spraying ice directly thereon or by immersing the fish in a vessel containing salt water with ice on the surface thereof. Different types of fish require one or the other of these different methods of cooling. Also, the use of fine ice particles provides for better cooling of the fish because the particles have a larger surface area and the brine drains quickly therefrom. The brine quickly cools the fish while it drains and the fine ice particles completely cool the fish without freezing it.

Moreover, the use of a vessel containing salt water and ice provides a thermal storage unit which can increase the capacity of the ice-making machine. Pre-chilled seawater optionally containing ice particles can be obtained from this vessel to provide pre-chilled water for the ice-making machine and/or to provide chilled water for the condenser of the ice-making machine.

### BRIEF DESCRIPTION OF THE DRAWINGS

Preferred embodiments of the invention will be further described, by way of illustration only, with reference to the following figures in which:
Figure 1 is a diagrammatic illustration of an apparatus for cooling fish on board a ship not falling within the scope of the claims;
Figure 2 is a diagrammatic illustration of an alternative embodiment of an apparatus for cooling fish on board a ship;
Figure 3 is a diagrammatic illustration of another alternative embodiment of an apparatus for cooling fish on board a ship;
Figure 4a is a partial sectional view of a portion of the devices illustrated in Figures 1, 2 and 3; and
Figure 4b is a cross section of the portion illustrated in Figure 4a taken along line A-A.

### BEST MODE

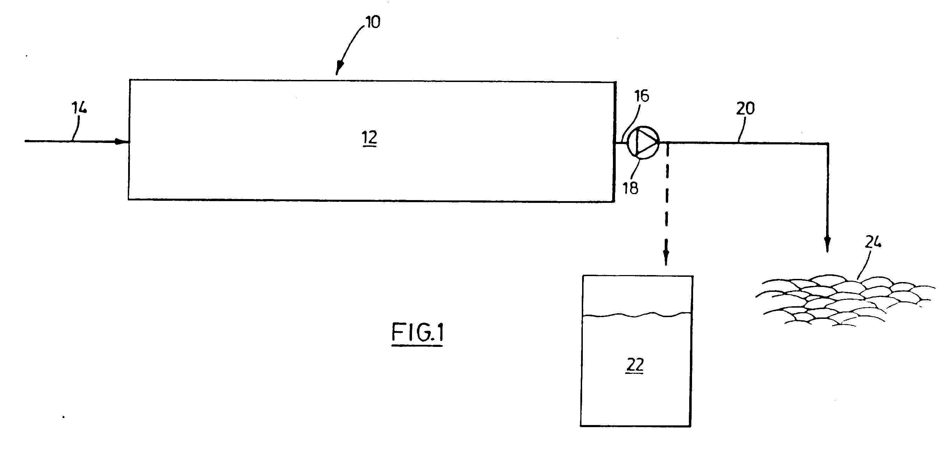

Referring first to Figure 1, it can be seen that an apparatus 10 for cooling fish on board a ship comprises an ice-making machine 12 capable of producing a slurry of fine particles of ice in a brine solution. The ice-making machine is of one of the designs disclosed in U.S. patent no. 4,551,159.

Brine enters the machine 12 through an inlet 14, and a slurry of fine ice particles in a brine solution exits the machine through an outlet 16. The ice-making machine preferably produces a slurry of 30-60% ice. The outlet is connected to a pump 18 which is connected to a flexible hose 20. This hose 20 can be carried to either a vessel 22 containing salt water or to a catch of fish 24 to direct ice slurry produced by the machine 12 directly to the catch of fish 24 or (as indicated by the dotted line) to the vessel 22.

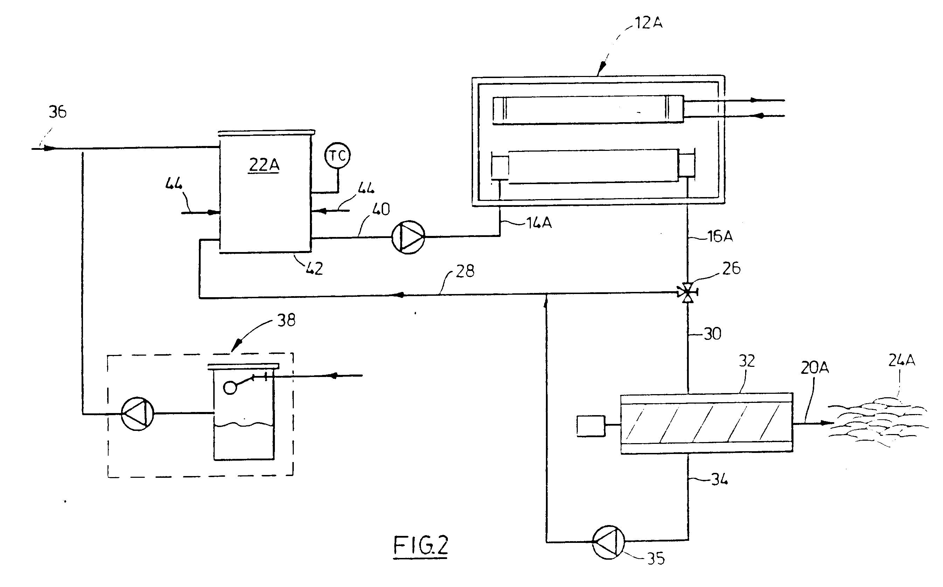

Figure 2 shows an alternative embodiment of the apparatus for cooling fish. Components similar to those in Figure 1 will be given the same reference numeral, followed by the suffix "A". In this embodiment, the outlet 16A of the ice-making machine 12A is connected by a three-way valve 26 to either the vessel 22A or to the catch of fish 24A.

A line 28 leads from the three-way valve 26 to the vessel 22A to transfer ice to the vessel 22A. A second line 30 leads from the valve 26 to a separator 32 in which ice is at least partially separated from brine and is directed through the flexible hose 20A to the catch of fish 24A. The separator 32 comprises a screw conveyor with a screen disposed therebelow. The brine from the separator 32 is sent by a line 34 to line 28 via a pump 35 and is thereby sent to the vessel 22A.

Makeup brine is sent to the vessel 22A via a direct seawater line 36 or from a brine storage unit 38. An outlet 40 in the lower portion 42 of the vessel 22A is connected to the ice-making machine 12A to transfer pre-chilled brine to the ice-making machine. Agitators, such as water jets 44, are optionally provided in the vessel 22A to agitate the ice so that some ice is entrained in the pre-chilled brine sent to the ice-making machine 12A.

In this embodiment, the efficiency of the ice-making unit is increased, resulting in substantial cost savings and reduced space requirements for the machine, by using pre-chilled brine in the ice-making machine.

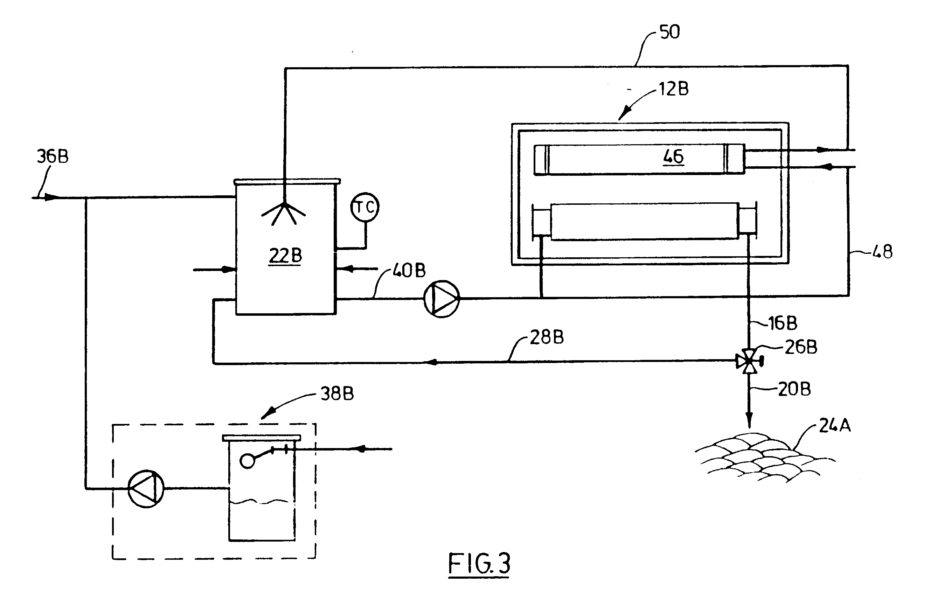

Figure 3 is an alternative embodiment of the apparatus of Figures 1 and 2. Elements similar to those shown in Figures 1 and 2 will be referred to by the same reference numeral followed by the suffix "B".

In the embodiment of Figure 3 some of the pre-chilled brine is sent to a condenser 46 of the ice-making machine 12B by a line 48. The warmed brine from the condenser 46 is then returned to the top of the vessel 22B for cooling via line 50.

In this embodiment, the use of the pre-chilled brine as a heat exchange medium for the condenser of the ice-making machine results in further increased capacity of the ice-making machine.

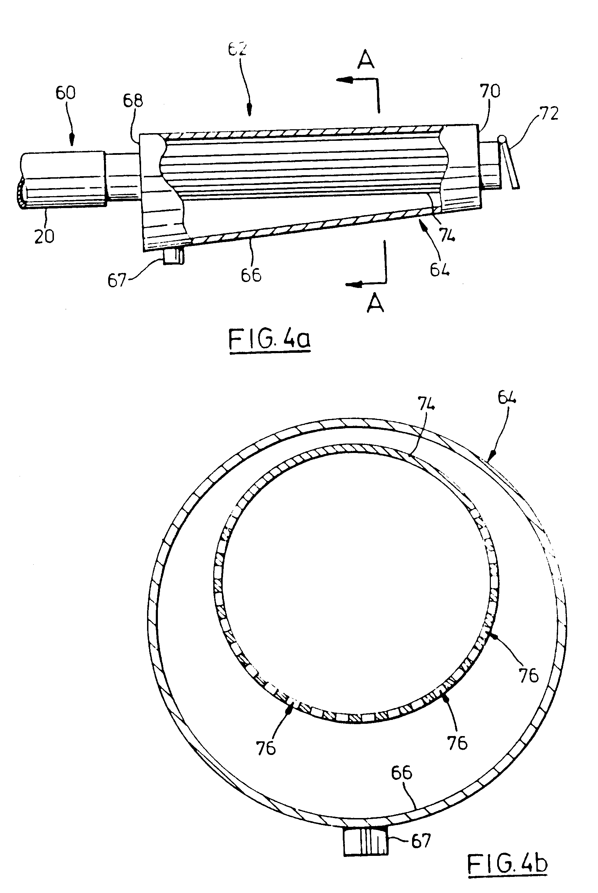

Referring to Figures 4a and 4b, another embodiment of the discharge end 60 of the flexible hose 20 used in any of the above-mentioned systems 10 is shown. This embodiment includes an ice slurry drier 62 connected to the discharge end of the flexible hose 20. The drier 62 comprises a housing 64 of circular cross-section having a lower sloping bottom surface 66, the surface being provided with a drain 67. The housing includes an inlet 68 connected to the flexible hose 20 having a diameter greater than the diameter of the flexible hose 20. An outlet 70 is also provided in the housing and has a diameter larger than that of the hose but less than that of the inlet 68. A closure flap 72 is pivotally connected to the outlet 70 to seal the housing when ice-slurry is not being pumped therethrough.

A hollow cylindrical sieve 74 is provided in the housing 64 and extends between the inlet and outlet 68 and 70 thereof. The sieve 74 has a diameter substantially the same as the flexible hose 20 and directs the ice-slurry through the housing. The sieve 74 is also provided with a plurality of spaced slots 76 on a portion of its circumference that extend along the entire length of the sieve 74.

In operation, the ice-slurry produced by the ice-making machine 12 that is being discharged through the flexible hose passes from the hose 20 into the sieve 74. The longitudinally extending slots 76 do not impede the flow of the ice-slurry but allow excess brine to be drained from the ice-slurry. The excess brine passes through the slots 76 as the slurry moves along the sieve 74 and falls to the bottom of the housing 64. The sloped lower surface 66 directs the excess brine to the drain 68 so that the brine can be released from the housing. The drained ice-slurry passes through the sieve 74 to the outlet 70 causing the flap 72 to open thereby allowing the dried ice-slurry to be applied to the catch of fish 24 or to the vessel 22. It should be noted that the drained brine can be re-circulated into the system 10 or the drain can be closed to prevent the drained brine from being released from the housing 64.

It should also be realized that the drier 62 can be used in combination with the separator 32 to increase further the drying of the ice-slurry or can be used in the systems 10 without the separator to permit the drainage of brine from the ice-slurry if desired.

## Claims

1. Cooling apparatus comprising;
an ice-making machine (12) for producing fine ice particles in a brine solution to form an ice-brine slurry, said ice-making machine having an outlet (16) for dispensing said ice-brine slurry and an inlet;
a vessel (22) for containing a brine solution and having an inlet for receiving said ice-brine slurry and an outlet (40) connected to the inlet of the ice-making machine; and
transport means (20,28) connected to the outlet of said ice-making machine, the apparatus being characterized in that it is suitable for cooling fish on board a ship, and in that:
i) said transport means includes means to direct said ice-brine slurry either to said vessel containing said brine solution or to a catch of fish (24); and
ii) said vessel being constructed to permit ice-brine slurry held in said vessel to be conveyed to said ice-making machine.

2. Apparatus as claimed in Claim 1 further including agitation means (44) located in said vessel.

3. Apparatus as claimed in Claim 1 or 2 wherein said ice-making machine has a condenser (46) and wherein said apparatus further incudes a connection (48) between the outlet of said vessel and the inlet of said condenser, and wherein the outlet of said condenser is connected to said vessel.

4. Apparatus as claimed in Claim 1, 2 or 3 wherein said transport means comprises a pump (18) connected to a flexible hose (20).

5. Apparatus as claimed in Claim 4 wherein said flexible hose includes means (62) for separating ice particles from brine solution.

6. Apparatus as claimed in any one of the preceding claims wherein the outlet of said ice-making machine is connected by a three-way valve (26) to both a flexible hose (20) and to a line (28) leading to said vessel.

7. Apparatus as claimed in any one of the preceding claims wherein an ice liquid separator (32) is associated with said transport means to separate ice particles from brine solution.

8. Apparatus as claimed in Claim 7 wherein said separator is connected to a line (30) leading from an outlet of said ice-making machine, and wherein an ice outlet of said separator is connected to a flexible hose (20) and a brine outlet (34) of said separator is connected to said vessel.

9. Apparatus as claimed in Claim 4 wherein said means (62) for separating ice particles from brine solution includes a cylindrical sieve (74) having closely spaced longitudinally extending slots (76) formed therethrough.

10. Apparatus as claimed in Claim 9 wherein said sieve is provided in a housing (64), said housing having a sloped bottom wall (66) and a drain (67) formed in said bottom wall (66), said bottom wall directing brine solution passing through said slots towards said drain.

11. Apparatus as claimed in Claim 10 wherein said housing further includes a closure flap (72) pivotally connected at the outlet end thereof.

12. A method of cooling which comprises the step of:
producing a slurry of fine ice particles in a brine solution via an ice-making machine; and
pre-chilling the brine solution in said vessel;
the method being characterized by the steps of:
directing said slurry along one of at least two paths to either a vessel containing a brine solution or a catch of fish; and
recirculating said slurry from said vessel to said ice-making machine,
the cooling method being one of cooling a catch of fish on board a ship.

13. A method according to Claim 12 wherein at least some of said brine solution is removed from said ice particles prior to directing said ice particles onto said catch of fish.

14. A method according to Claim 13 wherein the removed brine solution is sent to said vessel.

15. A method according to any one of Claims 12 to 14 wherein the contents of said vessel are agitated.

16. A method according to any one of Claims 12 to 15 wherein pre-chilled brine solution from said vessel is directed to a condenser in said ice-making machine and warmed brine solution from said condenser is directed to said vessel.

## Patentansprüche

1. Kühlvorrichtung mit folgenden Merkmalen:
eine eiserzeugende Maschine (12) zur Erzeugung feiner Eispartikel in einer Salzwasserlösung, um ein Eis-Salzwasser-Gemisch zu bilden, wobei die eiserzeugende Maschine einen Ausgang (16) zur Verteilung des Eis-Salzwasser-Gemisches besitzt, und einem Einlass;
ein Behältnis (22) zur Aufbewahrung einer Salzwasserlösung und einem Einlass zum Einfüllen des Eis-Salzwasser-Gemisches und einem Auslass (40) die mit dem Einlass der eiserzeugenden Maschine verbunden ist; und
weiterhin Transportmittel (20,28) verbunden mit dem Ausgang der eiserzeugenden Maschine; die Vorrichtung ist dadurch gekennzeichnet, daß sie geeignet zur Kühlung von Fisch an Bord eines Schiffes ist und dadurch:
i) daß die Transportmittel Mittel beinhalten, um das Eis-Salzwasser-Gemisch entweder zu dem genannten Behältnis, welches die genannte Salzwasserlösung beinhaltet oder zu einem Fischfang (24) leitet;
ii) dass das Behaltnis so konstruiert ist, daß das in dem genannten Behältnis gehaltene Eis-Salzwasser-Gemisch zu der genannten eiserzeugenden Maschine befördert werden kann.

2. Vorrichtung gemäß Anspruch 1, dadurch gekennzeichnet, daß sie in dem genannten Behältnis eine Rührvorrichtung (44) beinhaltet.

3. Vorrichtung gemäß Anspruch 1 oder 3, dadurch gekennzeichnet, daß die eiserzeugende Maschine einen Kondensator (46) beinhaltet und daß die Vorrichtung weiterhin eine Verbindung (48) zwischen dem Ausgang des Behältnisses und dem Eingang des Kondensators besitzt, wobei der Ausgang des Kondensators mit dem Behältnis verbunden ist.

4. Vorrichtung gemäß Anspruch 1, 2 oder 3, dadurch gekennzeichnet, daß die genannten Transportmittel eine Pumpe (18) beinhalten, die mit einem flexiblen Schlauch (20) verbunden ist.

5. Vorrichtung gemäß Anspruch 4, dadurch gekennzeichnet, daß der flexible Schlauch Mittel (62) zur Trennung der Eispartikel von der Salzwasserlösung beinhaltet.

6. Vorrichtung gemäß einem der vorhergehenden Ansprüche, dadurch gekennzeichnet, daß der Ausgang der eiserzeugenden Maschine mit einem Drei-Wege-Ventil (26) sowohl mit dem flexiblen Schlauch (20) als auch mit der Leitung (28), welche zu dem genannten Behältnis führt, verbunden ist.

7. Vorrichtung gemäß einem der vorhergehenden Ansprüche, dadurch gekennzeichnet, daß eine Eis-Flüssigkeits-Trennvorrichtung (32) mit den genannten Transportmitteln verbunden ist, um die Eispartikel von der Salzwasserlösung zu trennen.

8. Vorrichtung gemäß Anspruch 7, dadurch gekennzeichnet, daß die Trennvorrichtung mit der Leitung (30), welche vom Ausgang der eiserzeugenden Maschine abgeht, verbunden ist und daß ein Eisausgang aus der genannten Trennvorrichtung mit einem flexiblen Schlauch (20) verbunden ist und ein Salzwasserausgang (34) aus der genannten Trennvorrichtung mit dem genannten Behältnis verbunden ist.

9. Vorrichtung gemäß Anspruch 4, dadurch gekennzeichnet, daß das Mittel (62) zur Trennung der Eispartikel von der Salzwasserlösung ein zylindrisches Sieb (74) beinhaltet, welches durch eng angeordnete, sich longitudinal erstreckende Schlitze (76) gebildet wird.

10. Vorrichtung gemäß Anspruch 9, dadurch gekennzeichnet, daß das Sieb mit einem Gehäuse (64) versehen ist, wobei das Gehäuse eine geneigte Bodenwand (66) und ein Abflußrohr (67) in der genannten Bodenwand (66) besitzt, wobei die Bodenwand die Salzlösung durch die genannten Schlitze in Richtung auf den genannten Abfluß leitet.

11. Vorrichtung gemäß Anspruch 10, dadurch gekennzeichnet, daß das genannte Gehäuse eine Sperrklappe (72) beinhaltet, welche drehbar an dessen Ausgangsende befestigt ist.

12. Ein Verfahren zur Kühlung mit folgenden Verfahrensschritten:
Erzeugung eines Gemisches von feinen Eispartikeln in einer Salzwasserlösung durch eine eiserzeugende Maschine; und
Vorkühlung der Salzwasserlösung in dem genannten Behaltnis;
gekennzeichnet durch folgende Verfahrensschritte:
Überleitung des genannten Gemisches entlang einem von mindestens zwei wegen zu entweder einem Behältnis, welches eine Salzwasserlösung beinhaltet, oder einem Fischfang;
und Zurückführung des genannten Gemisches von dem genannten Behältnis zur eiserzeugenden Maschine, wobei das Kühlverfahren eines der Kühlverfahren eines Fischfanges an Bord eines Schiffes ist.

13. Ein Verfahren gemäß Anspruch 12, dadurch gekennzeichnet, daß mindestens ein Teil der genannten Salzwasserlösung von den genannten Eispartikeln entfernt wird, bevor die genannten Eispartikel auf den Fischfang geleitet werden.

14. Ein Verfahren gemäß Anspruch 13, dadurch gekennzeichnet, daß die abgeführte Salzwasserlösung dem genannten Behältnis zugeführt wird.

15. Verfahren gemäß einem der Ansprüche 12 bis 14, dadurch gekennzeichnet, daß der Inhalt des genannten Behältnisses gerührt wird.

16. Verfahren gemäß einem der Ansprüche 12 bis 15, dadurch gekennzeichnet, daß die vorgekühlte Salzwasserlösung aus dem genannten Behältnis einem Kondensator in der eiserzeugenden Maschine zugeführt wird und daß die erwärmte Salzwasserlösung aus dem genannten Kondensator in das genannte Behältnis geleitet wird.

## Revendications

1. Appareil de refroidissement comprenant :
une machine à glace (12) pour produire de fines particules de glace dans une saumure pour former une suspension glace-saumure, ladite machine à glace comportant une sortie (16) pour-délivrer ladite suspension glace-saumure, et une entrée;
un récipient (22) destiné à contenir une saumure et comportant une entrée destinée à recevoir ladite suspension glace-saumure et une sortie (40) relieé à l'entrée dudit machine à glace; et
des dispositifs de transport (20,28) reliés à la sortie de ladite machine à glace, l'appareil étant caractérisé en ce qu'il convient pour le refroidissement du poisson à bord d'un navire, et en ce que:
i) lesdits dispositifs de transport comportent des dispositifs pour envoyer ladite suspension glace-saumure audit récipient contenant ladite saumure au à une pêche de poissons (24), et
ii) ledit récipient étant agencé de manière à permettre à la suspension glace-saumure contenue dans ledit récipient d'être envoyée à ladite machine à glace.

2. Appareil selon la revendication 1, comprenant en outre des dispositifs d'agitation (44) situés dans ledit récipient.

3. Appareil selon la revendication 1 ou 2, dans lequel ladite machine à glace comporte un condenseur (46) et dans lequel ledit appareil comprend en outre une liaison (48) entre la sortie dudit récipient et l'entrée dudit condenseur, et dans lequel la sortie dudit condenseur est reliée audit récipient.

4. Appareil selon la revendication 1, 2 ou 3, dans lequel lesdits dispositifs de transport comprennent une pompe (18) reliée à un tuyau souple (20).

5. Appareil selon la revendication 4, dans lequel ledit tuyau souple comprend des dispositifs (62) pour séparer les particules de glace de la saumure.

6. Appareil selon l'une quelconque des revendications précédentes, dans lequel la sortie de ladite machine à glace est reliée par une vanne à trois voies (26) à un tuyau souple (20) et à une conduite (28) aboutissant audit récipient.

7. Appareil selon l'une quelconque des revendications précédentes, dans lequel un séparateur glace-liquide (32) est associé auxdits dispositifs de transport pour séparer les particules de glace de la saumure.

8. Appareil selon la revendication 7, dans lequel ledit séparateur est relié à une conduite (30) provenant d'une sortie de ladite machine à glace, et dans lequel une sortie de glace dudit séparateur est reliée à un tuyau souple (20) et une sortie de saumure (34) dudit séparateur est reliée audit récipient.

9. Appareil selon la revendication 4, dans lequel lesdits dispositifs (62) pour séparer les particules de glace de la saumure comprennent un tamis cylindrique (74) dans lequel sont formées des fentes longitudinales (76) rapprochées.

10. Appareil selon la revendication 9, dans lequel ledit tamis est disposé dans un boîtier (64), ledit boîtier comportant une paroi inférieure inclinée (66) et une évacuation (67) formée dans ladite paroi inférieure (66), ladite paroi inférieure dirigeant vers ladite évacuation la saumure qui traverse lesdites fentes.

11. Appareil selon la revendication 10, dans lequel ledit boîtier comprend en outre un clapet de fermeture (72) relié à pivotement à son extrémité de sortie.

12. Procédé de refroidissement qui comprend l'étape consistant à;
produire une suspension de fines particules de glace dans une saumure au moyen d'une machine à glace; et prérefroidir la saumure dans ledit récipient;
ce procédé étant caractérisé par les etapes consistant à:
diriger ladite suspension suivant un trajet parmi au moins deux trajets conduisant à un récipient contenant une saumure ou à une pêche de poissons, et
faire recirculer ladite suspension dudit récipient dans ladite machine à glace, le procédé de refroidissement concernant le refroidissement d'une pêche de poissons à bord d'un navire.

13. Procédé selon la revendication 12, dans lequel au moins une certaine quantité de ladite saumure est retirée desdites particules de glace avant d'envoyer lesdites particules de glace sur ladite pêche de poissons.

14. Procédé selon la revendication 13, dans lequel la saumure retirée est envoyée dans ledit récipient.

15. Procédé selon l'une quelconque des revendications 12 à 14, dans lequel le contenu dudit récipient est agité.

16. Procédé selon l'une quelconque des revendications 12 à 15, dans lequel la saumure prérefroidie provenant dudit récipient est envoyée à un condenseur dans ladite machine à glace et la saumure chauffée provenant dudit condenseur est envoyée dans ledit récipient.
